Europäisches Patentamt

**European Patent Office**

Office européen des brevets

(11) Publication number : **0 455 793 B1**

# EUROPEAN PATENT SPECIFICATION

(45) Date of publication of patent specification :
**12.04.95 Bulletin 95/15**

(21) Application number : **91900443.2**

(22) Date of filing : **19.11.90**

(86) International application number :
**PCT/US90/06708**

(87) International publication number :
**WO 91/08511 13.06.91 Gazette 91/13**

(51) Int. Cl.⁶ : **G03B 27/62**

(54) **FILM CLAMP.**

(30) Priority : **28.11.89 US 442375**
**22.10.90 US 601849**

(43) Date of publication of application :
**13.11.91 Bulletin 91/46**

(45) Publication of the grant of the patent :
**12.04.95 Bulletin 95/15**

(84) Designated Contracting States :
**DE FR GB**

(56) References cited :
**CH-A- 0 457 140**
**DE-B- 1 171 256**
**US-A- 2 248 646**
**US-A- 3 469 917**
**US-A- 4 774 553**

(73) Proprietor : **EASTMAN KODAK COMPANY**
**343 State Street**
**Rochester, New York 14650-2201 (US)**

(72) Inventor : **VanSCOOTER, Paul, Evan**
**10 Pinewood Knoll**
**Rochester, NY 14624 (US)**
Inventor : **JADRICH, Bradley, Stephen**
**28 Alecia Drive**
**Rochester, NY 14626 (US)**
Inventor : **WAKEFIELD, Edward, Henry**
**74 Buck Hill Road**
**Rochester, NY 14626 (US)**

(74) Representative : **Buff, Michel et al**
**Kodak-Pathé**
**Département des Brevets et Licences CRT**
**Centre de Recherches et de Technologie**
**Zone Industrielle**
**F-71102 Chalon sur Saône Cédex (FR)**

## Description

The present invention relates to a film clamp for use in apparatus such as a film scanner, and more particularly, to a film clamp for holding a film extremely flat in a film gate in such apparatus.

In various types of imaging apparatus, a photographic film must be clamped in a work station while a particular operation is performed on the film. In certain types of apparatus, for example, film scanners, the film must be held extremely flat in order for an image on the film to be recorded properly. One problem in maintaining the film flat is that photographic film has a natural curl due to an emulsion coated on one side of the film.

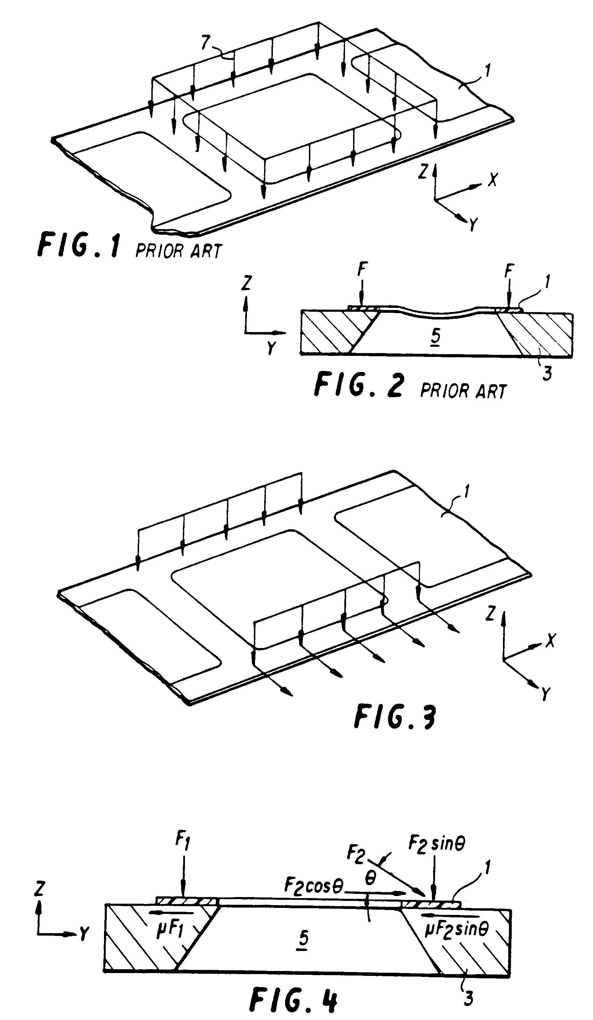

In a conventional film clamp, as illustrated in Figures 1 and 2, a film 1 is clamped against a platen 3 on all four sides of a rectangular aperture 5 by a vertical force represented by arrows 7. In the use of such a film clamp, the natural curl in the film 1 will be retained, and the film will not be held flat. Further, when all sides of the film 1 are clamped, any thermal variation of the film that occurs while the film is clamped can cause the film to buckle.

A further problem in known film clamps for film scanners is that it is difficult to advance short strips of film in the film gate relative to a scan beam of light. Normally, the film advance mechanism is located outside of the film clamp, for example, rollers operating on the film at opposite sides of the film clamp, and thus, the minimum length of film which can be handled is controlled by the distance between the rollers. US-A-4,774,553 discloses a film handling mechanism for a photographic printer. Said mechanism comprises a platen adapted to receive an elongated film strip and two endless belt which cooperates with the edges of the film strip to support and advance said film. A frame like gripping member articulated on the mechanism can be moved up and down by an electromagnet so that advance and clamping of the filmstrip in the gate for printing is allowed. The mechanism provided by US-A-4,774,553 works according to Fig. 1 and 2 of the application.

US-A-2,248,646 and CH-A-457,140 describe film tensionning mechanisms wherein gripper bars at opposite sides of the filmstrip are transversaly connected to each other by two arched bow springs. Upon pressure on the bow springs the gripper bars are first brought into contact with the film and thereafter urged outwardly relative to each other as the bow springs flatten so that the film is laterally tensioned. Said documents do not contain a film advance device.

It is an object of the present invention to overcome the problems in the prior art described above and to provide a film clamp which is adapted to hold a film very flat in a film gate and to advance short strips of film in the film gate.

In accordance with the present invention, there is provided a film clamp according to claim 1.

In one embodiment of the present invention, the film clamp comprises a platen having a flat working surface and a rectangular aperture in the surface. A proximal gripping member can be positioned to hold a film against the platen along one side of the film, and a distal gripping member can be positioned to hold the film against the platen along an opposite side of the film. The gripping members are mounted on resilient arms, and the gripping members are pressed toward the film by means of a bell crank which acts on the resilient arms. The gripping members function such that the proximal gripping member is moved toward the platen to grip the film first. The distal gripping member is then moved toward the platen and into contact with the film; upon contact with the film, a force on the distal gripping member in a direction away from the proximal gripping member tensions the film to hold the film flat on the platen. In order to provide a means for moving the film relative to the platen, a motor-driven endless belt mounted on the platen can be actuated to position a selected frame on the film relative to the aperture. The proximal gripping member is positioned to bear against the belt to grip the belt.

A principal advantage of the present invention is that a short strip of film can be advanced in a film gate, and once the film is positioned in the gate, the film can be held very flat in order to facilitate the scanning of the film. A further advantage is that the film advance mechanism is incorporated in the film clamp in a manner which simplifies the structure and reduces the cost of the device.

Embodiments of the present invention will now be described, by way of example, with reference to the accompanying drawings in which:

Figure 1 is a perspective view in free body diagram form which illustrates the operation of a conventional film clamp;

Figure 2 is a cross-sectional view in free body diagram form which further illustrates the operation of a conventional film clamp;

Figure 3 is a perspective view in free body diagram form which illustrates the operation of a film clamp according to the invention;

Figure 4 is a cross-sectional view in free body diagram form which further illustrates the operation of a film clamp according to the invention;

Figure 5 is a perspective view of an embodiment of a film clamp according to the invention;

Figure 6 is cross-sectional view taken along the line 6-6 in Figure 5, with certain parts omitted; and

Figures 7A and 7B are cross-sectional views taken along the line 7-7 in Figure 5. In Figure 7A, the film is held under the film advance mechanism. In Figure 7B, both sides of the film are clamped, and the film has been tensioned.

With reference to Figs. 3 and 4, there are shown diagrams in free body form which illustrate the operation of one aspect of the film clamp of the present invention. In Fig. 4, a film 1 is supported over a rectangular aperture 5 in a platen 3. Note that, if $\mu$ is the coefficient of static friction between the film 1 and the platen surface, the following relationship must be maintained:

$$\mu \, F_2 \cos \theta < \mu \, F_1 + \mu \, F_2 \sin \theta$$

Failure to meet the condition in the above relationship will result in slippage of the entire film 1 in the y direction when the force $F_2$ is applied.

In U.S. Patent No. 4,965,632, published Oct. 23, 1990 and entitled "Film Clamp," there is disclosed a film clamp which meets the conditions shown in the above relationship. This patent is assigned to the assignee of the present invention and discloses a film clamp which comprises a proximal gripping member and a distal gripping member. Each gripping member includes a tie bar and a cylinder mounted on the tie bar which makes line contact with the film. Each gripping member is mounted on two arms which are intrinsically resilient and are made of beryllium copper. When the arms are pressed toward the platen by an actuator, the proximal gripping member contacts the film first, forcing the film toward the platen; the distal gripping member then contacts the film and presses the distal edge of the film both toward the platen and away from the proximal gripping member to place the film in tension. Film is advanced under the film clamp by a mechanism which is located outside of the film gate.

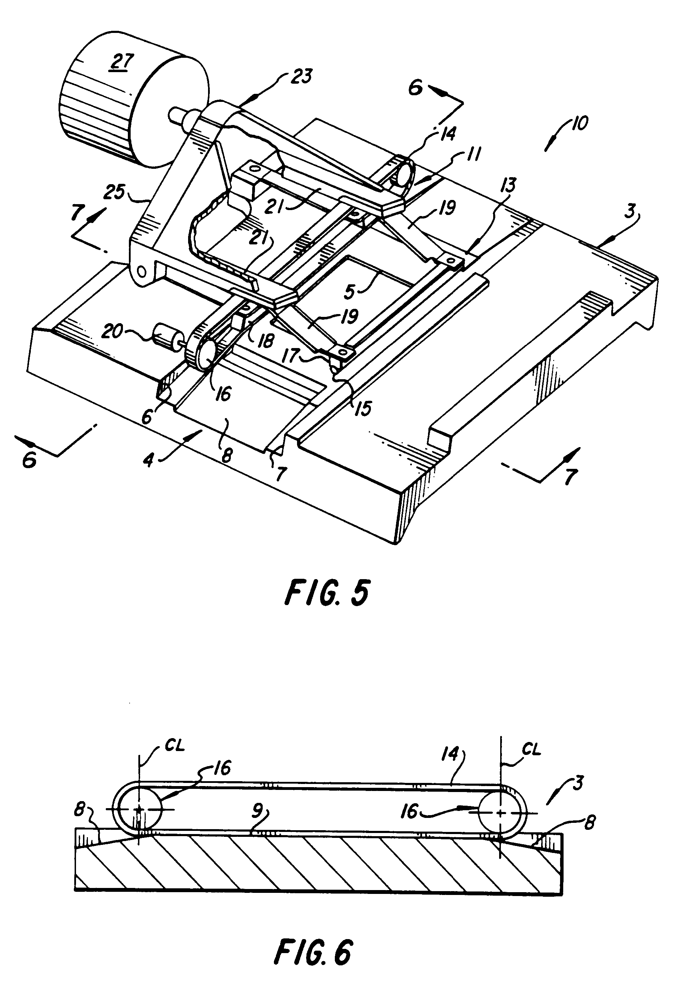

A film clamp 10 constructed in accordance with a preferred embodiment of the present invention is shown in Figures 5 and 6. Film clamp 10 comprises a film track 4 which is defined by a proximal edge 6 and a distal edge 7. The track 4 includes inclined portions 8 at its opposite ends. The portions 8 form an angle of about 10° with a flat working surface 9 of the platen 3.

An endless belt 14 is provided to advance a film strip in track 4. Belt 14 is trained around pulleys 16 which are supported for rotation by means of bearing blocks (not shown) on platen 3. A motor 20 (Fig. 5) is adapted to drive one of the pulleys 16. As shown in Fig. 6, the vertical centerlines CL of the pulleys 16 are located such that belt 14 wraps over the inclined portions 8 of film track 4 in platen 3; this belt wrap is necessary to give the belt enough normal or downward force on the film 1 so that the film will advance when the belt is set in motion by motor 20. The amount of belt wrap necessary to advance the film is dependent on the coefficient of friction of the belt material and the coefficient of friction of the film track. In one exemplary arrangement, the belt is made from a urethane coated polyester, and the platen is made from anodized Teflon-aluminum.

Film clamp 10 further includes a proximal gripping member 11 and a distal gripping member 13. Gripping member 11 comprises a tie bar 18 which can be moved into contact with belt 14 to hold the film 1 in position during a scanning operation. Gripping member 13 comprises a cylinder 15 which makes line contact with the film 1 and a tie bar 17 which supports the cylinder 15. Each gripping member 11, 13, is mounted on two arms 19. The arms 19 are preferably intrinsically resilient, and they can, for example, be made of beryllium copper or an appropriate spring steel.

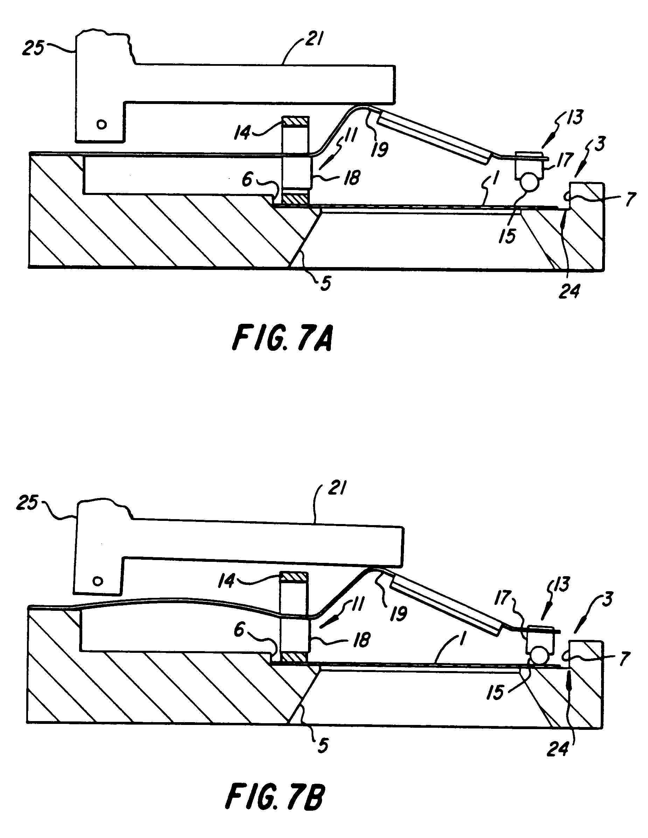

Each arm 19 can be pressed toward the platen 3 by a corresponding finger 21 of a bell crank 23. A third finger 25 of the bell crank 23 can be pivoted toward the platen 3 by an actuator 27 which can be a solenoid, an air cylinder, or a similar device. The intrinsic resiliency of the arms 19 returns them to the position shown in Figure 7A when the actuator 27 does not bear against the third finger 25.

As best seen in Figs. 7A and 7B, the arms 19 are preferably sized, shaped, and positioned so that, when the fingers 21 are pivoted toward the platen 3 by the actuator 27, the proximal gripping member 11 causes the belt 14 to grip the film 1 first, bearing at least essentially vertically against the proximal edge of the film 1 and forcing it toward the platen 3. Upon further movement of the fingers 21 by the actuator 27, the distal gripping member 13 contacts the film 1, pressing the distal edge of the film 1 both toward the platen 3 and away from the proximal gripping member 11 to place the film in tension.

When belt 14 is pressed against the film 1 by tie bar 18, the arms 19 flex, as shown in Fig. 7B; as this happens, a pawling action occurs which moves the film 1 against proximal edge 6 of the track 4. This action is very desirable, since it produces a gap 24 between the film 1 and distal edge 7 of the track 4. It is the gap 24 which allows the film 1 to be tensioned during the film clamping in order to produce the desired film flatness.

As can be seen from the foregoing, the belt 14 performs two functions in the present invention. When film clamp 11 is in the position shown in Fig. 7A, the belt 14 can be used to advance the film on the platen 3 in order to locate a frame on the film relative to aperture 5. When the film clamp 10 is in the position shown in Fig. 7B, the belt 14 functions in combination with tie bar 18 to hold the film 1 against platen 3 during a scanning operation.

In the film clamp according to an embodiment of the present invention, the proximal gripping member 11 presses at least essentially vertically against the film 1, and the distal gripping member 13 presses both toward the platen 3 and away from the proximal gripping member 11, as illustrated by the arrow representing the force $F_2$ in Figure 4. In the preferred embodiment of the present invention, there are preferably no gripping members on the lateral sides of the aperture 5, that is the sides of aperture 5 which extend between the proximal and distal sides of the film as defined herein. It will be apparent, however, that the film clamp of the present invention could operate in a position in which it is rotated 90° from the position in which it is shown in Fig. 5; in this case the gripping members would contact the film adjacent the lateral sides of the films. It is not essential to the invention that the distal and proximal gripping members be mounted on the same arms. However, the arrangement shown in the drawings has been found to be simple to manufacture and robust in use. Moreover, measurements using the disclosed film clamp 10 have shown that the film flatness is held to between 0,0245 mm (0.0010 inches) and 0.0015 inches over a standard 35 mm image area; this is in contrast to a flatness of .004 inches - .006 inches over a similar area provided by a conventional four-sided film clamp. Similar improvements in film flatness can be obtained in other sizes of film.

## Claims

1.  A film clamp comprising :
    a platen (3) having a flat working surface (9) for receiving a strip of film (1) thereon ;
    an endless belt (14) facing said flat working surface for moving the film (1) relative to said platen, said film being located between said belt and said working surface;
    characterized by :
    a first gripping member (11) mounted for movement into contact with the endless belt (14) for causing the belt to grip the film along a first portion of the platen ;
    a second gripping member (13) mounted for movement into a position along a second portion of the platen (3) to grip the film (1) between said working surface (9) (3) and said second gripping member (13) ; and
    means (19, 23, 27) for pressing said first gripping member (11) and said belt (14) toward said platen (3) before said second gripping member (13) is moved into contact with the film (1), said second gripping member (13) being then pressed toward said platen (3) and away from said first gripping member (11).

2.  A film clamp, as defined in Claim 1, wherein said pressing means (19, 23, 27) presses said first and second gripping members (11, 13) resiliently toward said platen.

3.  A film clamp, as defined in Claim 2, wherein said pressing means (19, 23, 27) comprises an arm (19) to which each of said first and second gripping members (11, 13) is attached.

4.  A film clamp, as defined in Claim 3, wherein said arm (19) is made out of beryllium copper.

5.  A film clamp, as defined in Claim 2, wherein said pressing means (19, 23, 27) comprises two arms (19), each of said first and second gripping members (11, 13) being attached to both of said two arms (19).

6.  A film clamp, as defined in any of Claims 1 to 5, wherein said platen (3) comprises a track (4) which includes said working surface (9) and has first and second edges (6, 7) at opposite sides of said surface (9).

7.  A film clamp, as defined in Claim 6, wherein said film (1) is moved against said first edge (6) by the action of said first gripping member (11).

8.  A film clamp, as defined in Claim 7, wherein said film (1) is tensioned in the direction of said second edge (7) when said second gripping member (13) is moved into contact with said film (1).

9.  A film clamp, as defined in any of Claims 6 to 8, wherein said track (4) includes inclined portions (8) at opposite ends thereof.

10. A film clamp, as defined in Claim 1, wherein said pressing means comprises two arms (19), each of said first and second gripping members (11, 13) being attached to both of said two arms (19), and said pressing means (19, 23, 27) further comprises a bell crank (23) for pressing against said two arms (19).

11. A film clamp, as defined in Claim 10, wherein said pressing means (19, 23, 27) further comprises an actuator (27) that bears against said bell crank (23).

## Patentansprüche

1.  Filmklammer mit
    einer eine flache Arbeitsfläche (9) aufweisenden Auflage (3) zum Haltern eines Filmstreifens (1), und
    einem der Arbeitsfläche zugewandten Endlosband (14) zum Transportieren des Films (1) relativ zur Auflage, wobei der Film zwischen dem Band und der Arbeitsfläche angeordnet ist,
    **gekennzeichnet durch**
    ein erstes Greifelement (11), das derart bewegbar ist, daß es in Berührung mit dem Endlosband (14) gelangt, wodurch das Endlosband entlang eines ersten Abschnitts der Auflage (3) den Film erfaßt,

ein zweites Greifelement (13), das derart bewegbar ist, daß es in eine Position entlang eines zweiten Abschnitts der Auflage (3) bewegbar ist, um den Film (1) zwischen sich und der Arbeitsfläche (9) zu erfassen, und

Mittel (19, 23, 27), die das erste Greifelement (11) und und das Endlosband (14) zur Auflage (3) hin drücken, ehe das zweite Greifelement (13) in Berührung mit dem Film (1) gelangt, wodurch das zweite Greifelement (13) zur Auflage (3) hin und vom ersten Greifelement (11) weg gedrückt wird.

2. Filmklammer nach Anspruch 1, dadurch gekennzeichnet, daß die Mittel (19, 23, 27) das erste und zweite Greifelement (11, 13) federnd zur Auflage (3) hin drücken.

3. Filmklammer nach Anspruch 2, dadurch gekennzeichnet, daß die Mittel (19, 23, 27) einen Arm (19) aufweisen, an dem sowohl das erste als auch das zweite Greifelement (11, 13) befestigt ist.

4. Filmklammer nach Anspruch 3, dadurch gekennzeichnet, daß der Arm (19) aus Berylliumkupfer besteht.

5. Filmklammer nach Anspruch 2, dadurch gekennzeichnet, daß die Mittel (19, 23, 27) zwei Arme (19) aufweisen, an denen jeweils sowohl das erste als auch das zweite Greifelement (11, 13) befestigt ist.

6. Filmklammer nach einem der Ansprüche 1 bis 5, dadurch gekennzeichnet, daß die Auflage (3) mit einer Führungsbahn (4) versehen ist, die die Arbeitsfläche (9) sowie eine erste und zweite Kante (6, 7) an einander gegenüberliegenden Seiten der Arbeitsfläche (9) umfaßt.

7. Filmklammer nach Anspruch 6, dadurch gekennzeichnet, daß der Film (1) vom ersten Greifelement (11) gegen die erste Kante (6) bewegt wird.

8. Filmklammer nach Anspruch 7, dadurch gekennzeichnet, daß der Film (1) zur zweiten Kante (7) hin gespannt wird, wenn das zweite Greifelement (13) in Berührung mit dem Film (1) gelangt.

9. Filmklammer nach einem der Ansprüche 6 bis 8, dadurch gekennzeichnet, daß die Führungsbahn (4) an ihren einander gegenüberliegenden Enden schräg verlaufende Abschnitte (8) aufweist.

10. Filmklammer nach Anspruch 1, dadurch gekennzeichnet, daß die Mittel (19, 23, 27) mit zwei Armen (19) versehen sind, wobei das erste und zweite Greifelement (11, 13) jeweils an den beiden Armen (19) befestigt sind, und daß die Mittel (19, 23, 27) einen Kniehebel (23) aufweisen, der Druck gegen die beiden Arme (19) ausübt.

11. Filmklammer nach Anspruch 10, dadurch gekennzeichnet, daß die Mittel (19, 23, 27) eine Betätigungsvorrichtung (27) aufweisen, die am Kniehebel (23) gelagert ist.

## Revendications

1. Serre-film comprenant :

une platine (3) ayant une surface de travail plane (9) pour recevoir une bande de film (1),

une courroie sans fin (14) en regard de cette surface de travail plane pour déplacer le film (1) par rapport à cette platine, le film étant disposé entre cette courroie et cette surface de travail,

un premier élément de préhension (11) monté de manière à pouvoir se déplacer au contact de la courroie sans fin (14) pour amener la courroie à saisir le film le long d'une première partie de la platine,

un deuxième élément de préhension (13) monté pour pouvoir se déplacer dans une position le long d'une deuxième partie de la platine (3) pour saisir le film (1) entre cette surface de travail (9) et ce deuxième élément de préhension (13), et

des moyens (19, 23, 27) pour presser ce premier élément de préhension (11) et cette courroie (14) vers cette platine (3) avant que ce deuxième élément de préhension (13) soit déplacé en contact avec le film (1), ce deuxième élément de préhension (13) étant alors pressé vers cette platine (3) et écarté de ce premier élément de préhension (11).

2. Serre-film selon la revendication 1, dans lequel ces moyens de pression (19, 23, 27) pressent le premier et le deuxième éléments de préhension (11, 13) de manière élastique vers cette platine.

3. Serre-film selon la revendication 2, dans lequel ces moyens de pression (19, 23, 27) comprennent un bras (19) auquel chacun des premier et deuxième éléments de préhension (11n 13) est fixé.

4. Serre-film selon la revendication 3, dans lequel ce bras (19) est constitué d'un alliage de cuivre-béryllium.

**5.** Serre-film selon la revendication 2, dans lequel ces moyens de pression (19, 23, 27) comprennent deux bras (19), chacun de ces premier et deuxième éléments de préhension (11, 13) étant fixé à ces deux bras (19).

**6.** Serre-film selon l'une quelconque des revendications 1 à 5, dans lequel cette platine (3) comprend une piste (4) qui inclut ladite surface de travail (9) et a un premier et un deuxième bords (6, 7) sur les côtés opposés de cette surface (9).

**7.** Serre-film selon la revendication 6, dans lequel ce film (1) est déplacé contre ce bord (6) par l'action de ce premier élément de préhension (11).

**8.** Serre-film selon la revendication 7, dans lequel ce film (1) est placé sous tension dans la direction de ce deuxième bord (7) lorsque ce deuxième élément de préhension (13) est déplacé en contact avec ce film (1).

**9.** Serre-film selon l'une quelconque des revendications 6 à 8, dans lequel cette piste (4) comprend des parties inclinées (8) à ses extrémités opposées.

**10.** Serre-film selon la revendication 1, dans lequel ces moyens de pression comprennent deux bras (19), chacun de ces premier et deuxième éléments de préhension (11, 13) étant fixés à ces deux bras (19), et ces moyens de pression ( 19, 23, 27) comprennent par ailleurs un levier coudé (23) susceptible de se presser contre ces deux bras (19).

**11.** Serre-film selon la revendication 10, dans lequel ces moyens de pression (19, 23, 27) comprennent par ailleurs une commande (27) qui s'appuie contre ce levier coudé (23).

FIG.1 PRIOR ART

FIG.2 PRIOR ART

FIG.3

FIG.4

FIG. 5

FIG. 6

FIG. 7A

FIG. 7B